# EUROPEAN PATENT APPLICATION

(11) **EP 4 578 836 A2**
(43) Date of publication of application: **02.07.2025**
(21) Application number: 25177162.2
(22) Date of filing: 18.02.2019
(51) Int. Cl.: C02F 9/00

(54) **METHOD AND PROCESS ARRANGEMENT FOR REMOVING SI BASED COMPOUNDS FROM A LEACHING LIQUOR AND USE**

(62) Divisional of application: 19891685.0
(71) Applicant: Metso Finland Oy, 02230 Espoo (FI)
(72) Inventor: Jansson, Kaj, 33250 Tampere (FI)
(74) Representative: Papula Oy

(57) **Abstract**

In a method for removing Si based compounds from a leaching liquor, the method comprises supplying the leaching liquor (2) from a leaching step (1) to a gravitational solid-liquid separator (3) for separating an overflow (4) and an underflow (15), supplying an overflow (4) from the gravitational solid-liquid separator (3) to a reactor (6) for forming a treated liquor (9), adding a source of aluminium (5) as a first coagulant to the overflow (4) in the reactor (6) for forming aluminium silicate containing particles in the treated liquor (9), adding at least a flocculant (7) to the treated liquor (9) after the reactor (6) for increasing particle size of the aluminium silicate containing particles, and supplying the treated liquor (9) to cleaning flotation in which at least 90 % of the flotation gas bubbles display a size from 0.2 to 250 µm in a cleaning flotation unit (10) for collecting at least the aluminium silicate containing particles, for separating at least the aluminium silicate containing particles from the treated liquor (9) into a cleaning flotation overflow and for forming a purified liquor (11) as a cleaning flotation underflow.

## Description

### TECHNICAL FIELD

The current disclosure relates to a method for removing Si based compounds from a leaching liquor. Further, the current disclosure relates to a process arrangement for removing Si based compounds from a leaching liquor. Further, the current disclosure relates to a use of the method.

### BACKGROUND

In roasting and leaching processes of metallurgical raw materials pH variations can be from neutral to basically zero depending on process stage. Silicates will dissolve and form silica gels with different metal ions after the pH is reduced from more neutral towards zero. Aluminium silicates are the most insoluble formations, even at very low pH stage. Other silicates tend to resolubilize. In leaching processes, there is not enough aluminium to react with all the soluble silica for forming the aluminium silicates. Thus, different metal silicates form and solubilize again and again in the process. Then the soluble silicates cause different process problems, such as pH changes, poor filtration, dewatering, sedimentation, loss of valuables, and process breakdown, and then the process is difficult to operate. Therefore, soluble silicates need to be removed from the leaching liquor. However, in known processes, it is difficult to reduce an amount of the silicates in process liquids.

### SUMMARY OF THE INVENTION

A method for removing Si based compounds from a leaching liquor is disclosed. In the method, the leaching liquor is supplied from a leaching step to a gravitational solid-liquid separator for separating at least an overflow and an underflow, an overflow from the gravitational solid-liquid separator is supplied to a reactor for forming a treated liquor, a source of aluminium is added as a first coagulant to the overflow in the reactor for forming aluminium silicate containing particles in the treated liquor, at least a flocculant is added to the treated liquor after the reactor for increasing particle size of the aluminium silicate containing particles, and the treated liquor is supplied to cleaning flotation in which at least 90 % of the flotation gas bubbles display a size from 0.2 to 250 µm in a cleaning flotation unit for collecting at least the aluminium silicate containing particles, for separating at least the aluminium silicate containing particles from the treated liquor into a cleaning flotation overflow and for forming a purified liquor as a cleaning flotation underflow.

In the present method, the overflow from the gravitational solid-liquid separator after the leaching step is chemically treated and supplied to cleaning flotation in cleaning flotation unit so that Si based particles may be removed as an overflow. By means of this invention Si based compounds, especially soluble Si and Si compounds, can be removed from the leaching liquor. Further, in the cleaning flotation unit, colloidal material, such as generated colloidal particles, may also be removed from the treated liquor.

The present method can be used in connection with a recovery of metals, e.g. Zn or Ag, and/or in connection with a roasting process of ores, especially in connection with a leaching arrangement. The purpose is to reduce an amount of Si based compounds, such as silica and silicates, especially soluble silica and silicates, in a leaching liquor.

According to a further aspect of the invention, a process arrangement for removing Si based compounds from a leaching liquor is provided. The process arrangement comprises a gravitational solid-liquid separator for treating the leaching liquor and separating an overflow and an underflow and for removing solids from the leaching liquor, a reactor in which the overflow from the gravitational solid-liquid separator is treated with a source of aluminium as a first coagulant for forming a treated liquor and aluminium silicate containing particles in the treated liquor, at least one additive device for adding at least a flocculant to the treated liquor after the reactor for increasing particle size of the aluminium silicate containing particles, and a cleaning flotation unit employing flotation gas bubbles of which at least 90 % have a size from 0.2 to 250 µm, operationally connected to the gravitational solid-liquid separator and arranged to collect at least the aluminium silicate containing particles, to separate at least the aluminium silicate containing particles from the treated liquor into a cleaning flotation overflow, and to form a purified liquor as a cleaning flotation underflow. In an embodiment, the process arrangement comprises a first feeding device for supplying the leaching liquor from a leaching device of the leaching step to the gravitational solid-liquid separator. In an embodiment, the process arrangement comprises a second feeding device for supplying the overflow from the gravitational solid-liquid separator to the reactor. In an embodiment, the process arrangement comprises a dosage device for adding the source of aluminium to the overflow in the reactor for forming aluminium silicate containing particles in the treated liquor. In an embodiment, the process arrangement comprises a third feeding device for supplying the treated liquor to the cleaning flotation unit.

According to a further aspect of the invention, use of the method is provided. The method can be used in a recovery of metals, in an ore process, a roasting process, a hydrometallurgy process, a leaching process or their combinations. In an embodiment, the method is used in a recovery of metals, in which the metal is chosen from a group comprising: Zn, Cu, Fe, Al, Ag, Au, Ni, Co, Sc, or their combinations. In a further embodiment, the method is used in a recovery of Zn and/or Ag. In a yet further embodiment, the method is used in stabilisation of the recovery between different metals.

In the roasting process with a leaching, a metal containing material, e.g. Zn containing material, is roasted and after that a metal concentrate is dissolved in strong acid, e.g. >50 g/l H₂SO₄, in an acid dissolving unit of strong acid and/or in super strong acid, >100 g/l H₂SO₄, in an acid dissolving unit of super strong acid and treated by a leaching in a leaching step for cleaning impurities before supplying a metal containing liquid to a metal electrolytic process, such as to an electrowinning process. In the leaching process, the pH can vary from neutral to basically zero. The acid used in the leaching is recirculated in the process. Typically, this recirculated acid comprises Si based compounds which are problematic in the recirculation of the acid and in a treatment of process liquid and, therefore, they have to be removed from the leaching liquor. In an embodiment, an overflow of the flotation is supplied to the roasting process.

In the leaching arrangement, the metal concentrate, e.g. Zn concentrate, is treated with the acid. The leaching arrangement comprise at least one leaching step or more than one leaching steps. In a gravitational solid-liquid separator, such as a thickener, of the leaching arrangement, the leaching liquor can be separated into underflow and overflow, and solids can be removed from the leaching liquor. The leaching liquor comprises at least metals, and further the leaching liquor comprises at least Si based compounds as impurities. The underflow of the gravitational solid-liquid separator comprises at least metals and it can be supplied to a next process step. The overflow comprises at least Si based compounds, such as soluble Si compounds.

In this context, Si based compound can mean any silicon compound, silicon based compound, silica, silica compound, silicate compound, silicate, or their combinations.

In this context, aluminium silicate containing particles can mean any particles which comprises at least aluminium silicate. Said particles may comprise also other components. Preferably, aluminium silicate is an insoluble silicate.

In this context, leaching means any leaching, extraction or the like.

In an embodiment, the gravitational solid-liquid separator is a thickener or a clarifier.

In an embodiment, prior to supplying the overflow from the gravitational solid-liquid separator into the reactor, the overflow is led into a gravitational solid-liquid separator overflow tank, e.g. a thickener overflow tank. By means of the gravitational solid-liquid separator overflow tank, the flow is stabilized for the reactor. In an embodiment of the process arrangement, the process comprises a gravitational solid-liquid separator overflow tank after the gravitational solid-liquid separator. In a further embodiment, the process comprises a thickener overflow tank after the thickener.

In an embodiment, the source of aluminium is an aluminium compound without harmful anions for the process. In a further embodiment, the harmful anion is chosen from a group comprising: chloride, sulphate, nitrate. In yet a further embodiment, the source of aluminium is an aluminium compound, for example Al(OH)₃, Al₂O₃, metallic aluminium or other suitable aluminium compound. In yet a further embodiment, the source of aluminium is Al(OH)₃. In yet a further embodiment, Al(OH)₃ is in the form of solid particles or powder, because there is suitable pH and temperature in the process for forming aluminium silicate particles easily and with short reaction time from Si based compounds and the solid Al(OH)₃. In yet a further embodiment, the source of aluminium is added to the overflow in an amount of 1 - 4000 ppm.

In an embodiment, an organic coagulant is added to the treated liquor after the reactor. In a further embodiment, the organic coagulant is added to the treated liquor after the reactor simultaneously or in a same step with the flocculant. In a further embodiment, the flocculant and/or the organic coagulant, such as the flocculant or the flocculant and the organic coagulant, are added by means of mixing to the treated liquor after the reactor. In yet a further embodiment, the flocculant is added into the treated liquor in an amount of 1 - 50 ppm. In yet a further embodiment, the organic coagulant is added into the treated liquor in an amount of 0 to 100 ppm.

In an embodiment, the flocculant is chosen from a group comprising: synthetic flocculants, natural polymers, e.g. polyacrylamides, PEO (polyethylene oxide), mannich polymers, and their combinations. Alternatively, any suitable flocculants which are known in the art can be used. In an embodiment, the organic coagulant is chosen from a group comprising: bentonite, polymer coagulants, e.g. polyDADMAC (polydiallyldimethylammonium chloride), polyepiamine or polyethylenimine, and their combinations. Alternatively, any suitable organic coagulants which are known in the art can be used.

It is important that the first coagulant, which is the source of aluminium in this context, is first added to the overflow liquor for forming the particles in the liquor. After that the flocculant is added to the liquor for increasing the particle size of the particles. Further, the organic coagulant may be added to the liquor together with the flocculant. Coagulation is a process, whereby destabilisation of a given suspension or solution is effected. Flocculation is a process, whereby destabilised particles, or particles formed as a result of the destabilisation, are induced to come together, make contact and thereby form larger agglomerates. The primary coagulant refers to that a chemical or substance added to a given suspension or solution to effect destabilisation. The flocculants are those chemicals or substances added to destabilised suspension to accelerate the rate of flocculation or to strengthen floc formed during flocculation.

In an embodiment of the method, the temperature is 80 - 98 °C in the reactor. In a further embodiment, the temperature is 85 - 98 °C in the reactor.

In an embodiment of the method, the residence time in the reactor is 3 minutes to 210 minutes. In a further embodiment, the residence time is 15 minutes to 120 minutes. When the residence time in the reactor is short, there is easy to control a dosage of the source of aluminium and process parameters.

In an embodiment of the method, at least 20 % of total Si of the gravitational solid-liquid separator overflow (4) from the leaching liquor (2) is removed. In a further embodiment, at least 50 % of total Si of the overflow (4) from the leaching liquor (2) is removed. In this context, total Si mean the sum of all soluble or colloidal silica, silica compound, silicate, silicate compound or their combinations.

Si content of the feed of the gravitational solid-liquid separator may be 400 - 1500 mg/l. In an embodiment, the total Si content of the purified liquor (11) is below 800 mg/l. In a further embodiment, the total Si content of the purified liquor (11) is below 500 mg/l.

In an embodiment, the Si based compounds are removed from the leaching liquor after a desired leaching step. In an embodiment of the process arrangement, the Si based compounds are removed from the leaching liquor after a desired leaching device. In a further embodiment, the Si based compounds are removed from the leaching liquor after a neutral leaching step or leaching device. In a yet further embodiment, the Si based compounds are removed from the leaching liquor after an acid leaching step or leaching device.

The aluminium silicate containing particles can be separated from the treated leaching liquor by means of the cleaning flotation unit. Then any separate concentration tank, which is slow process step, or filter device, which can clog, is not needed in the process for separating the Si containing particles. The aluminium silicate particles can be removed from the cleaning flotation unit as an overflow.

In an embodiment, the cleaning flotation unit is a dissolved gas flotation (DAF) unit.

In an embodiment, the purified liquor is recovered as an underflow from the cleaning flotation unit and supplied to a desired process step, e.g. to a next process step. In a further embodiment, the purified liquor is recirculated back to the process, such as to the roasting process. In a yet further embodiment, the purified liquor is recirculated back to the leaching step. In a yet further embodiment, the purified liquor is recirculated back to the acid dissolving step, e.g. before the acid dissolving step. The purified liquor comprises significantly less silicates.

In an embodiment, a formed sludge comprising aluminium silicate containing particles is recovered as an overflow from the cleaning flotation unit. In a further embodiment, the formed sludge is further treated in a post-treatment step.

In an embodiment, the cleaning flotation unit is a DAF unit.

In an embodiment, the process arrangement further comprises a separator overflow tank after the gravitational solid-liquid separator.

In an embodiment, the gravitational solid-liquid separator is a thickener or a clarifier.

The present method or process arrangement is suitable for removing Si based compounds from the leaching liquor in the leaching arrangement, especially after the desired leaching step of the leaching arrangement.

In the present method and the process arrangement of the invention, the purified liquid with low Si content, such as soluble Si content, can be produced. Also improved process operation and process conditions can be provided by means of the invention. Further, by means of the invention, more Si containing ores and concentrates can be used in the metallurgical processes, such as in the roasting processes and leaching processes.

### BRIEF DESCRIPTION OF THE DRAWINGS

The accompanying drawings, which are included to provide a further understanding of the current disclosure and which constitute a part of this specification, illustrate embodiments of the disclosure and together with the description help to explain the principles of the current disclosure. In the drawings:
Figs. 1 - 2 are simplified flow charts of embodiments of the invention.
Fig. 3 is a simplified flow chart of an embodiment of the method.
Fig. 4 presents results from a test of an embodiment of the invention.

### DETAILED DESCRIPTION

Reference will now be made in detail to the embodiments of the present disclosure, an example of which is illustrated in the accompanying drawings.

The description below discloses some embodiments in such a detail that a person skilled in the art is able to utilize the process arrangement, and the method based on the disclosure. Not all steps of the embodiments are discussed in detail, as many of the steps will be obvious for the person skilled in the art based on this disclosure.

For reasons of simplicity, item numbers will be maintained in the following exemplary embodiments in the case of repeating components.

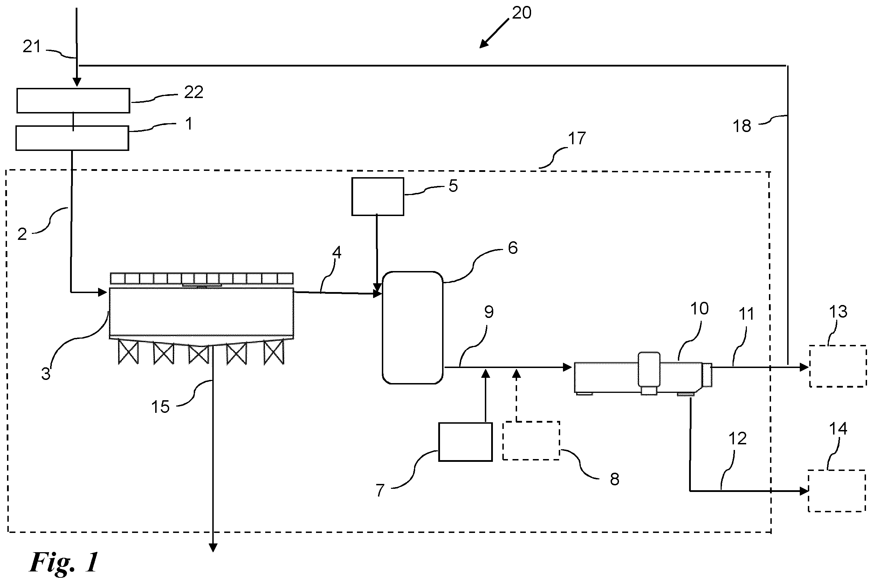

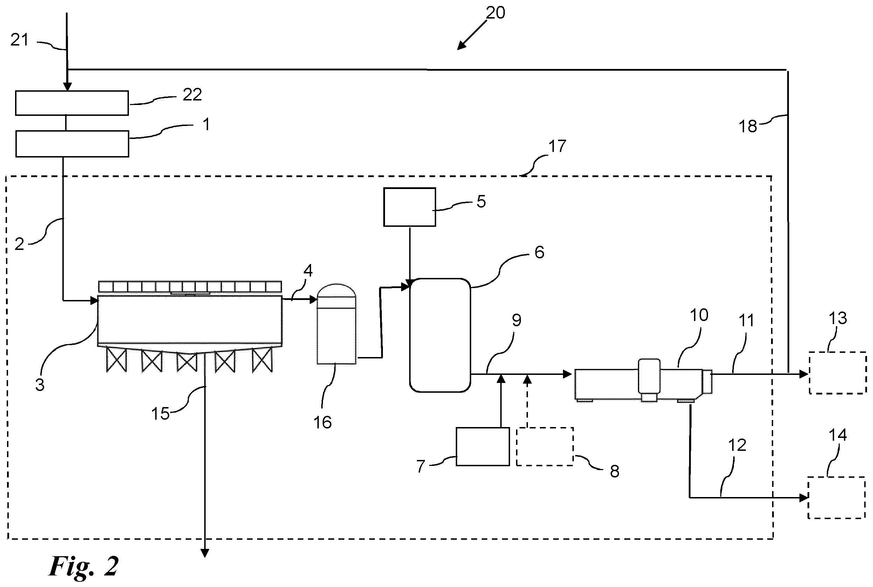

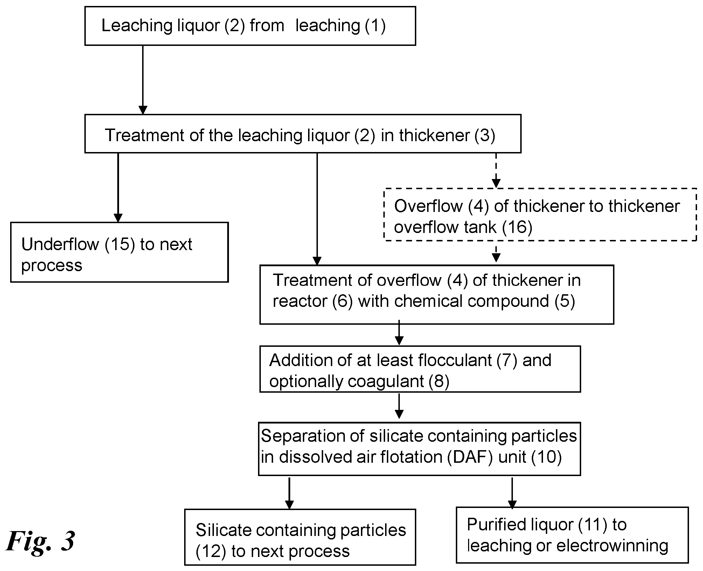

The enclosed Fig. 1 and 2 illustrate a leaching arrangement (20) and a process arrangement (17) of the invention in some detail. The enclosed Fig. 3 illustrates a method for removing silica compound from a leaching liquor. The figures are not drawn to proportion, and many of the components of are omitted for clarity.

The leaching arrangement (20) of Fig. 1 and 2 comprises an acid dissolving unit of strong acid and/or acid dissolving unit of strong acid (22) arranged to treat with an acid a metal concentrate (21) from a roasting unit, and at least one leaching device (1) for leaching the metal concentrate and forming a leaching liquor (2). The leaching arrangement (20) further comprises the process arrangement (17) for removing Si based compounds from the leaching liquor (2).

The process arrangement (17) comprises a gravitational solid-liquid separator (3) for separating an overflow (4) and underflow (15) and removing solids from the leaching liquor (2) after the leaching device. The overflow (4) comprises at least Si based compounds. The gravitational solid-liquid separator (3) may be a thickener or a clarifier. The process arrangement further comprises a reactor (6) in which the overflow (4) from the gravitational solid-liquid separator (3) is treated with a source of aluminium (5) as a first coagulant for forming a treated liquor (9) and aluminium silicate containing particles in the treated liquor (9). The process arrangement further comprises at least one additive device for adding at least a flocculant (7), and optionally also at least one additive device for adding an organic coagulant (8), to the treated liquor (9) after the reactor (6) for increasing particle size of the aluminium silicate containing particles.

The process arrangement (17) further comprises a cleaning flotation unit (10). The cleaning flotation unit (10) employs flotation gas to float aluminium silicate containing particles collected by collector chemicals. In particular, flotation in the cleaning flotation unit (10) is executed by utilising microbubbles, or flotation gas bubbles having a particular size range. In the cleaning flotation and cleaning flotation unit (10) according to the invention, at least 90 % of the flotation gas bubbles fall into a size range of 0.2 to 250 µm. The cleaning flotation may employ dissolved gas flotation (DAF), and the cleaning flotation unit (10) may be a DAF unit. Other methods for effecting flotation with smaller sized flotation gas bubbles may also be employed, such as electrical double layer flotation or membrane flotation.

DAF is a microflotation process which is used in various applications in water or effluent clarification. Solid particles are separated from liquid by using very small flotation gas bubbles, microbubbles. The microbubbles with a size range of 30 - 100 µm are generated by dissolving air or other flotation gas into the liquid under pressure. The bubbles are formed in a pressure drop when dispersion is released. The particles of solid form attach to the bubbles and rise to the surface. A formed, floating sludge is removed from the liquid surface with sludge rollers as DAF overflow. Chemicals may sometimes be needed to aid flocculation and increase solids removal efficiency. Typically, colloids removal is possible with efficient coagulation.

In the cleaning flotation unit (10), the treated liquor (9) is subjected to flotation in order to collect at least the aluminium silicate containing particles, and additionally also colloidal particles. At least the aluminium silicate containing particles are separated from the treated liquor (9) into a cleaning flotation overflow (12) which is removed from the process arrangement. The cleaning flotation overflow (12) may be treated in post-treatment process step (14). Simultaneously, a purified liquor (11) is formed in the cleaning flotation unit (10) as a cleaning flotation underflow. The purified liquor (11) may be recirculated back to the leaching arrangement (20), for example to the metal concentrate (21) before the acid dissolving unit (22) or to the acid dissolving unit (22), to be used for example as dilution liquor for feed comprising metal concentrate (21). Alternatively, the purified liquor (11) may be supplied to a next process step (13).

Additionally, the process arrangement (17) may comprise a first feeding device for supplying the leaching liquor (2) from the leaching device (1) to the gravitational solid-liquid separator (3), a second feeding device for supplying the overflow (4) from the gravitational solid-liquid separator (3) to the reactor (6), a dosage device for adding the source of aluminium (5) to the overflow (4) in the reactor (6) for forming aluminium silicate containing particles in the treated liquor (9), and/or a third feeding device for supplying the treated liquor (9) to the cleaning flotation unit (10).

In the embodiment of Fig. 2, the process arrangement (17) further comprises a separator overflow tank (16) directly after the gravitational solid-liquid separator (3), and the overflow (4) of the gravitational solid-liquid separator (3) is supplied into the separator overflow tank (16) and from separator overflow tank to the reactor (6).

In the method according to the arrangements of Figs. 1 - 2 and Fig. 3, the leaching liquor (2) which comprises acid, such as sulphuric acid, is supplied from the leaching device of the leaching step (1) to the gravitational solid-liquid separator (3), e.g. to the thickener. The gravitational solid-liquid separator removes solids from the leaching liquor at low pH (H₂SO₄ >50 mg/l) and ensures solubility of most metal silicates and silica gels. The overflow (4) from the gravitational solid-liquid separator (3) is supplied to the reactor (6) for forming the treated liquor (9). It is observed that mainly unreacted soluble silicas present in the overflow. The underflow (15) from the gravitational solid-liquid separator (3) is supplied to a next process or to a next process step. In the reactor (6), the source of aluminium (5) as the first coagulant is added to the overflow (4) for forming insoluble aluminium silicate particles in the treated liquor (9). The aluminium source (5) is an aluminium compound without harmful anions, e.g. chloride, sulphate or nitrate, and the aluminium source may be, for example, Al(OH)₃, Al₂O₃ or metallic aluminium. One possible source of aluminium is solid Al(OH)₃ is added as the first coagulant to the overflow (4) for forming insoluble aluminium silicate particles in the treated liquor (9). The source of aluminium may be added to the overflow in an amount of 1 - 4000 ppm. The residence time in the reactor may be 3 min to 210 min. The temperature in the reactor may be 80 - 98 °C.

After the reactor (6), at least a flocculant (7), and alternatively also an organic coagulant (8), is added, for example with inline mixing, to the treated liquor (9) for increasing particle size of the aluminium silicate particles. Flocculants may be selected from synthetic flocculants, natural polymers and their combinations. Some possible flocculants are polyacrylamides, PEO (polyethylene oxide) and mannich polymers. Organic coagulants may be selected from bentonite, polymer coagulants and their combinations. Some possible organic coagulants are polyDADMAC (polydiallyldimethylammonium chloride), polyepiamine and polyethylenimine. The flocculant may be added into the treated liquor in an amount of 1 to 50 ppm, and/or the organic coagulant may be added into the treated liquor in an amount of 0 to 100 ppm.

The treated liquor (9) is supplied to the cleaning flotation, i.e. to the cleaning flotation unit (10), for separating the aluminium silicate particles from the treated liquor (9) and for forming a purified liquor (11). The cleaning flotation may be dissolved gas flotation (DAF), and the cleaning flotation unit (10) may be a DAF unit (10). The purified liquor has lower silica content. The purified liquor (11) is recovered from the cleaning flotation unit and is supplied to a next process step (13) or recirculated back to the leaching process, e.g. before the acid dissolving. A formed sludge (12) which comprises aluminium silicate particles forms onto the surface in the cleaning flotation unit, and the formed sludge is recovered from the cleaning flotation unit and is supplied to a post-treatment step or device (14) in which the sludge is treated. Further, generated colloidal particles which are problem particles in further process steps can be separated from the treated liquor in the cleaning flotation unit. In the embodiment of Fig. 2, the overflow (4) of the gravitational solid-liquid separator (3) can be led into the separator overflow tank (16) and from the separator overflow tank to the reactor (6).

By means of the process of the invention, at least 20 %, in an embodiment at least 50 %, of total Si of the overflow (4) from the leaching liquor (2) can be removed.

The following embodiments described in the clauses below are also disclosed.
1. A method for removing Si based compounds from a leaching liquor; the method comprising
   - supplying the leaching liquor (2) from a leaching step (1) to a gravitational solid-liquid separator (3) for separating an overflow (4) and an underflow (15),
   - supplying an overflow (4) from the gravitational solid-liquid separator (3) to a reactor (6) for forming a treated liquor (9),
   - adding a source of aluminium (5) as a first coagulant to the overflow (4) in the reactor (6) for forming aluminium silicate containing particles in the treated liquor (9),
   - adding at least a flocculant (7) to the treated liquor (9) after the reactor (6) for increasing particle size of the aluminium silicate containing particles, and
   - supplying the treated liquor (9) to cleaning flotation in which at least 90 % of the flotation gas bubbles display a size from 0.2 to 250 µm in a cleaning flotation unit (10) for collecting at least the aluminium silicate containing particles, for separating at least the aluminium silicate containing particles from the treated liquor (9) into a cleaning flotation overflow and for forming a purified liquor (11) as a cleaning flotation underflow.
2. The method according to item 1, characterized in that the gravitational solid-liquid separator is a thickener.
3. The method according to item 1 or 2, characterized in that prior to supplying the overflow (4) from the gravitational solid-liquid separator (3) into the reactor (6), the overflow is led into a separator overflow tank (16).
4. The method according to any one of items 1 to 3, characterized in that the source of aluminium is an aluminium compound without harmful anions.
5. The method according to item 4, characterized in that the harmful anion is chosen from a group comprising: chloride, sulphate, nitrate.
6. The method according to any one of items 1 to 5, characterized in that the source of aluminium is Al(OH)3, Al2O3 or other aluminium compound.
7. The method according to any one of items 1 to 6, characterized in that the source of aluminium is Al(OH)3.
8. The method according to any one of items 1 to 7, characterized in that the source of aluminium is added to the overflow in an amount of 1 - 4000 ppm.
9. The method according to any one of items 1 to 8, characterized in that the flocculant (7) is chosen from a group comprising: synthetic flocculants, natural polymers and their combinations.
10. The method according to any one of items 1 to 9, characterized in that the flocculant (7) is added into the treated liquor (9) in an amount of 1 to 50 ppm.
11. The method according to any one of items 1 to 10, characterized in that an organic coagulant (8) is added to the treated liquor (9) after the reactor (6).
12. The method according to item 11, characterized in that the organic coagulant (8) is chosen from a group comprising: bentonite, polymer coagulants and their combinations.
13. The method according to item 11 or 12, characterized in that the organic coagulant (8) is added into the treated liquor (9) in an amount of 0 to 100 ppm.
14. The method according to any one of items 1 to 13, characterized in that the flocculant (7) and/or the organic coagulant (8) is added by means of mixing to the treated liquor (9) after the reactor (6).
15. The method according to any one of items 1 to 14, characterized in that temperature is 80 - 98 °C in the reactor (6).
16. The method according to any one of items 1 to 15, characterized in that residence time in the reactor (6) is 3 - 210 minutes.
17. The method according to any one of items 1 to 16, characterized in that at least 20 % of total Si of the overflow (4) from the leaching liquor (2) is removed.
18. The method according to any one of items 1 to 17, characterized in that at least 50 % of total Si of the overflow (4) from the leaching liquor (2) is removed.
19. The method according to any one of items 1 to 18, characterized in that Si based compounds are removed from the leaching liquor (2) after the desired leaching step.
20. The method according to any one of items 1 to 19, characterized in that the cleaning flotation unit (10) is a dissolved gas flotation (DAF) unit.
21. The method according to any one of items 1 to 20, characterized in that the purified liquor (11) is recovered as an underflow from the cleaning flotation unit (10) and supplied to a next process step (13).
22. The method according to any one of items 1 to 21, characterized in that the purified liquor (11) is recovered as an underflow from the cleaning flotation unit (10) and recirculated back to the process.
23. The method according to any one of items 1 to 22, characterized in that a formed sludge (12) comprising the aluminium silicate containing particles is recovered as an overflow from the cleaning flotation unit (10) and treated in a post-treatment step (14).
24. A process arrangement (17) for removing Si based compounds from a leaching liquor (2); wherein the process arrangement comprises
   - a gravitational solid-liquid separator (3) for treating the leaching liquor (2) and separating an overflow (4) and an underflow (15) and for removing solids from the leaching liquor (2),
   - a reactor (6) in which the overflow (4) from the gravitational solid-liquid separator (3) is treated with a source of aluminium (5) as a first coagulant for forming a treated liquor (9) and aluminium silicate containing particles in the treated liquor (9),
   - at least one additive device for adding at least a flocculant (7) to the treated liquor (9) after the reactor (6) for increasing particle size of the aluminium silicate containing particles, and
   - a cleaning flotation unit (10) employing flotation gas bubbles of which at least 90 % have a size from 0.2 to 250 µm, operationally connected to the gravitational solid-liquid separator (3) and arranged to collect at least the aluminium silicate containing particles, to separate at least the aluminium silicate containing particles from the treated liquor (9) into a cleaning flotation overflow (12), and to form a purified liquor (11) as a cleaning flotation underflow.
25. The process arrangement according to item 24, characterized in that the cleaning flotation unit (10) is a DAF unit.
26. The process arrangement according to item 24 or 25, characterized in that the process arrangement (17) further comprises a separator overflow tank (16) after the gravitational solid-liquid separator (3).
27. The process arrangement according to any one of items 24 to 26, characterized in that the gravitational solid-liquid separator (3) is a thickener or a clarifier.
28. A use of the method according to any one of items 1 to 23, wherein the method is used in a recovery of metals, in which metal is chosen from a group comprising: Zn, Cu, Fe, Al, Ag, Au, Ni, Co, Sc, or their combinations.
29. The use of the method according to item 28, wherein the method is used in a recovery of Zn and/or Ag.

### EXAMPLES

### Example 1

In this example, the existing liquid parameters were examined with HSC sim with existing process parameters. Temperature was 90 °C, pH was 0.1 (H₂SO₄ >50g/l) and Si-content was 1000 mg/l. Results showed that all soluble Si could be transferred into insoluble aluminium silicate by addition of solid Al(OH)₃.

However, other typical metal ions do not form particles at these conditions, making these process steps ideal for aluminosilicate formation and thereby reduction of Si-concentration in the process. Following metal species do not show any particle forming:
MnSiO₃, MnSiO₃(P), Mn₂SiO₄, Mn₇SiO₁₂, MgSiO₃, MgSiO₃(A), MgSiO₃(C), MgSiO₃(E), MgSiO₃(G), MgSiO₃(GL), MgSiO₃(HP), MgSiO₃(HT), MgSiO₃(I), MgSiO₃(L), MgSiO₃(M), MgSiO₃(O), MgSiO₃(P), MgSiO₃(PE), Mg₂SiO₄, Mg₂SiO₄(BF), Mg₂SiO₄(F), Mg₂SiO₄(GF), Mg₂SiO₄(R), Mg₂SiO₄(W), M9₂Si₂O₆(P), M9₂Si₂O₆(C), M9₂Si₂O₆(E), Mg₂Si₂O₆(HPC), Mg₂Si₂O₆(LC), Mg₂Si₂O₆(O), Mg₄Si₄O₁₂(M), FeO*SiO₂, 2FeO*SiO₂, FeSiO₃, FeSiO₃(A), FeSiO₃(G), FeSiO₃(I), FeSiO₃(M), FeSiO₃(O), FeSiO₃(P), FeSiO₃(PF), Fe₂SiO₄(B), Fe₂SiO₄(G), Fe₂SiO₄(R), Fe₂SiO₄(W).

### Example 2

In this example, utilization of solid Al(OH)₃ was examined as a source of aluminium in removing Si from the liquid.

The utilization of Al(OH)₃ as the source of aluminium reduces the amount of possible harmful anions left in the process liquid after formation of aluminosilicates. The anions are typically Cl-, SO₄- and NO₃-anions, from which the Cl-anions can result in corrosion issues and SO₄-anions leads easily to CaSO₄ scaling. The Al(OH)₃ is also the cheap pure material that can be easily transported as dry material to the site, thus saving transport costs.

### Example 3

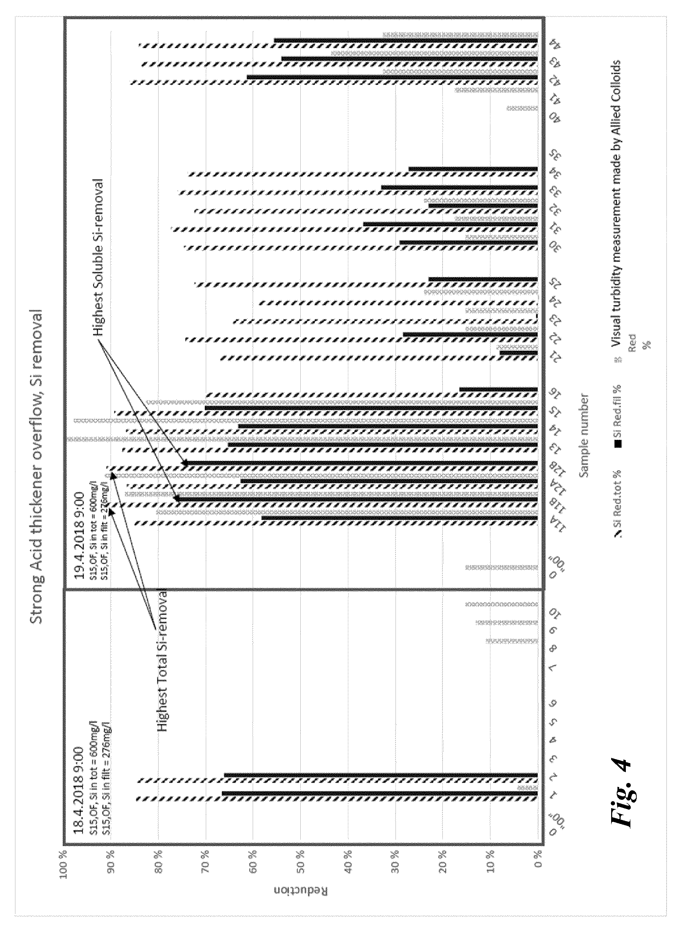

In this example, Si compounds were removed from a leaching liquor in laboratory tests according to the present method. In Fig. 4 test results are shown.

The leaching liquor was a thickener overflow from the mill.

The test samples 11A and 11B had a dose of Al(OH)₃ 250 mg/l and the test samples 12A and 12B had a dose of Al(OH)₃ 2000 mg/l. Said test samples were kept in 90 °C for 150 min under mixing conditions. Differences with the A and B samples were that the A samples are flocculated with 4 ppm Superfloc A100HMW and the B samples are flocculated with 10 ppm Superfloc C557 (organic coagulant type polyamine) followed by 4 ppm Superfloc A100HMW. These dosages or reaction times have not been optimized. Results of said tests showed that it is possible to remove over 90 % of total silica and over 70 % of soluble silica without any optimization of the process according to the present method.

Similar indicative tests 8,9 and 10 with same chemistries by shorter reaction time, 10 min, were made. However, these tests indicated clearly that the reaction time needed to solubilize and react the Al(OH)₃ with silicates was not long enough.

The embodiments described hereinbefore may be used in any combination with each other. Several of the embodiments may be combined together to form a further embodiment. A leaching circuit to which the disclosure is related, may comprise at least one of the embodiments described hereinbefore. It is obvious to a person skilled in the art that with the advancement of technology, the basic idea of the invention may be implemented in various ways. The invention and its embodiments are thus not limited to the examples described above; instead they may vary within the scope of the claims.

## Claims

1. A process arrangement (17) for removing Si based compounds from a leaching liquor (2); wherein the process arrangement comprises
- a gravitational solid-liquid separator (3) for treating the leaching liquor (2) and separating an overflow (4) and an underflow (15) and for removing solids from the leaching liquor (2),
- a reactor (6) in which the overflow (4) from the gravitational solid-liquid separator (3) is treated with a source of aluminium (5) as a first coagulant for forming a treated liquor (9) and aluminium silicate containing particles in the treated liquor (9),
- at least one additive device for adding at least a flocculant (7) to the treated liquor (9) after the reactor (6) for increasing particle size of the aluminium silicate containing particles, and
- a cleaning flotation unit (10) employing flotation gas bubbles of which at least 90 % have a size from 0.2 to 250 µm, operationally connected to the gravitational solid-liquid separator (3) and arranged to collect at least the aluminium silicate containing particles, to separate at least the aluminium silicate containing particles from the treated liquor (9) into a cleaning flotation overflow (12), and to form a purified liquor (11) as a cleaning flotation underflow.

2. The process arrangement according to claim 1, **characterized in that** the cleaning flotation unit (10) is a DAF unit.

3. The process arrangement according to claim 1 or 2, **characterized in that** the process arrangement (17) further comprises a separator overflow tank (16) after the gravitational solid-liquid separator (3).

4. The process arrangement according to any one of claims 1 to 3, **characterized in that** the gravitational solid-liquid separator (3) is a thickener or a clarifier.
